# EUROPÄISCHE PATENTSCHRIFT

(11) **EP 3 814 239 B1**
(45) Veröffentlichungstag und Bekanntmachung des Hinweises auf die Patenterteilung: **20.11.2024**
(21) Anmeldenummer: 19713379.6
(22) Anmeldetag: 14.03.2019
(51) Int. Cl.: B65B 57/10, G05B 19/418, G01P 1/12

(54) **BEHÄLTERBEHANDLUNGSANLAGE UND REGELVERFAHREN**
CONTAINER-HANDLING FACILITY AND REGULATING METHOD
INSTALLATION DE TRAITEMENT DE CONTENANTS ET PROCÉDÉ DE RÉGULATION

(30) Priorität: 29.06.2018 DE 102018210670
(43) Veröffentlichungstag der Anmeldung: 05.05.2021
(73) Patentinhaber: Krones AG, 93073 Neutraubling (DE)
(72) Erfinder: POESCHL, Stefan, 93073 Neutraubling (DE)
(74) Vertreter: Grünecker Patent- und Rechtsanwälte PartG mbB
(86) Internationale Anmeldenummer: PCT/EP2019/056394
(87) Internationale Veröffentlichungsnummer: WO 2020/001818

(56) Entgegenhaltungen:
- WO-A2-2004/080615
- WO-A2-2004/080615
- US-A1- 2002 000 361
- US-A1- 2002 000 361
- H.S. CHO ET AL: "Artificial Neural Networks in Manufacturing Processes: Monitoring and Control", 5TH IFAC SYMPOSIUM ON MODELLING AND CONTROL IN BIOMEDICAL SYSTEMS 2003, MELBOURNE, AUSTRALIA, 21-23 AUGUST 2003, vol. 31, no. 15, 1 June 1998 (1998-06-01), pages 529 - 537, XP055597944, ISSN: 1474-6670, DOI: 10.1016/S1474-6670(17)40607-0
- RICK LINGLE: "Smart device measures production line pressure points on packages", PACKAGING DIGEST, 1 December 2013 (2013-12-01), pages 1 - 36, XP055597925, Retrieved from the Internet <URL:http://dc.cn.ubm-us.com/i/220458-packaging-digest-december-2013/26> [retrieved on 20190619]
- RICK LINGLE: "Smart device measures production line pressure points on packages", PACKAGING DIGEST, 1 December 2013 (2013-12-01), pages 1 - 36, XP055597925, Retrieved from the Internet <URL:http://dc.cn.ubm-us.com/i/220458-packaging-digest-december-2013/26> [retrieved on 20190619]
- H.S. CHO ET AL: "Artificial Neural Networks in Manufacturing Processes: Monitoring and Control", IFAC THE 2012 IFAC WORKSHOP ON AUTOMATIC CONTROL IN OFFSHORE OIL AND GAS PRODUCTION, vol. 31, no. 15, 1 June 1998 (1998-06-01), Red Hook, NY, pages 529 - 537, XP055597944, ISSN: 1474-6670, ISBN: 978-1-123-47890-7, DOI: 10.1016/S1474-6670(17)40607-0

## Beschreibung

Die vorliegende Erfindung betrifft eine Behälterbehandlungsanlage zum Behandeln von Behältern, wie Dosen oder Flaschen oder dergleichen der getränkeverarbeitenden Industrie, nach Anspruch 1, sowie ein Regelverfahren für einen Betriebsparameter einer Behälterbehandlungsanlage in der getränkeverarbeitenden Industrie gemäß Anspruch 8.

### Stand der Technik

Behälterbehandlungsanlagen sind aus dem Stand der Technik in der getränkeverarbeitenden Industrie hinreichend bekannt. Diese umfassen zumeist eine oder mehrere in Transportrichtung der Behälter nacheinander angeordnete Behälterbehandlungsmaschinen und Transporteinrichtungen, die die Behälter zwischen den Behälterbehandlungsmaschinen transportieren. Auch Transporteinrichtungen, die die Behälter innerhalb einer der Behälterbehandlungsmaschinen transportieren, sind bekannt. Dazu zählen beispielsweise Förderer, die Behälter in einem Massenstrom transportieren, aber auch Vorrichtungen, die zu einem individuellen oder zumindest vereinzelten Transport der Behälter ausgebildet sind. Diese sind beispielsweise Standteller mit dazugehörigen Zentriereinrichtungen oder Klammern, die die Behälter umgreifen und tragen können, aber auch Förderbänder, die lediglich einzelne Behälter transportieren. Zu solchen Transporteinrichtungen zählen auch Transportsterne, die eine Reihe von Greifelementen aufweisen, die zusammen um eine Rotationsachse rotieren und Behälter aufnehmen können. Bei Behältern in Form von Glasflaschen kann es bei gegenseitigem Oberflächenkontakt oder Kontakt zu einem Teil der Behälterbehandlungsmaschine (ein Geländer oder andere Begrenzung beispielsweise) zu Abreibungen kommen, welche "scuffing" genannt wird. PET Flaschen können ebenfalls zerkratzt und gequetscht werden.

Während des Transports der Behälter bewirken viele Betriebsparameter, die Einfluss auf die Bewegung der Behälter haben, unterschiedliche Effekte, die sich auch nachteilig auf die Behälter auswirken können. Werden Behälter beispielsweise in einem Massenstrom transportiert, und ist die Anzahl der dem Massenstrom zugeführten Behälter zu groß, kann es zu einem Behälterstau kommen. Dies kann insbesondere beim Transport von Dosen zu Quetschungen und damit zur Beschädigung einzelner Dosen führen.

Auch ein zu starkes Einspannen der Behälter durch Zentriereinrichtungen und Standteller oder durch Greifelemente im Allgemeinen kann zu unerwünschten Beschädigungen führen.

Hier können Kräfte auf die Behälter einwirken, die von üblicherweise verwendeten Sensoren und Steuereinheiten nicht unmittelbar oder nur schwierig erkannt werden können, so dass solche Probleme häufig erst am Ende der Behälterbehandlung nach Passieren einer geeigneten Inspektionseinheit erkannt werden, was einen erheblichen Ausschuss nach sich ziehen kann. Auch wird es durch diesen Umstand schwieriger, bei den häufig sehr umfangreichen Behälterbehandlungsanlagen den eigentlichen Grund für die Beschädigung der Behälter ausfindig zu machen. Dies kann zu langwierigen Fehleranalysen führen.

So zeigt beispielsweise die Druckschrift WO 2004/080615 A2 eine flaschenförmige Sensorvorrichtung, welche den Betriebsleitern von Abfüllanlagen die Möglichkeit geben kann, die Handhabungs- und Betriebseigenschaften einzelner Verpackungslinien aus der Perspektive einer Flasche selbst zu betrachten. Die flaschenförmige Sensorvorrichtung läuft direkt neben echten Flaschen durch eine Abfüllverarbeitungslinie und identifiziert übermäßige Aufprallpunkte, die den Aufprallort und die Größe sofort in Echtzeit melden. Die gesammelten Informationen ermöglichen es den Betreibern von Abfüllanlagen, die Effizienz bei der Flaschenverpackung zu verbessern, Vorfälle von Flaschenabrieb und -bruch zu reduzieren, die Effizienz bei der Anlagenumstellung zu verbessern und bei der täglichen vorbeugenden Wartung zu helfen.

Rick Lingle: "Smart device measures production line pressure points on packages",Packaging Digest, 1. Dezember 2013 offenbart Drucksensoren in Behälteranlagen.

### Aufgabe

Ausgehend vom bekannten Stand der Technik besteht die zu lösende technische Aufgabe somit darin, eine Behälterbehandlungsanlage und ein Regelverfahren anzugeben, das eine gezielte Regelung von Betriebsparametern abhängig von auf die Behälter einwirkenden Kräften möglichst in Echtzeit gewährleistet.

### Lösung

Diese Aufgabe wird erfindungsgemäß durch die Behälterbehandlungsanlage gemäß Anspruch 1 und das Regelverfahren gemäß Anspruch 8 gelöst. Vorteilhafte Weiterbildungen der Erfindung sind in den Unteransprüchen erfasst.

Die erfindungsgemäße Behälterbehandlungsanlage zum Behandeln von Behältern, wie Dosen oder Flaschen oder dergleichen in der getränkeverarbeitenden Industrie, umfasst wenigstens eine Transporteinrichtung zum Transportieren der Behälter und eine in die Transporteinrichtung einbringbare Drohne, wobei die Behälterbehandlungsanlage eine Steuereinheit ausgebildet zur Regelung wenigstens eines Betriebsparameters und eine der Steuereinheit zugeordnete Speichereinrichtung ausgebildet zum Hinterlegen von Soll-Werten für den wenigstens einen Betriebsparameter umfasst, wobei die Drohne einen Beschleunigungssensor zum Messen einer auf die Drohne einwirkenden Beschleunigung und einen Drucksensor zum Messen eines auf die Drohne einwirkenden Drucks in der Transporteinrichtung umfasst, wobei die Drohne ausgebildet ist, Daten entsprechend einer gemessenen Beschleunigung und eines gemessenen Drucks an die Steuereinheit zu übertragen und die Steuereinheit ausgebildet ist, wenigstens einen Betriebsparameter, der die Beschleunigung der Drohne und/oder den auf die Drohne einwirkenden Druck beeinflusst, abhängig von einem Vergleich zwischen den von der Drohne empfangenen Daten und in der Speichereinrichtung gespeicherter Soll-Werte für den Betriebsparameter und/oder die Beschleunigung und/oder den Druck zu regeln.

Die Drohne ist hier als ein Objekt zu verstehen, das in der Transporteinrichtung mittransportiert wird. Es kann daher in Form, Größe oder Beschaffenheit den eigentlich in der Transporteinrichtung transportierten Behältern ähneln oder gleichen. Handelt es sich bei den Behältern beispielsweise um Dosen, kann die Drohne ähnliche Abmessungen und auch ein ähnliches Gewicht oder andere physikalische Charakteristika wie die Dosen aufweisen. Die Erfindung ist jedoch nicht auf Dosen beschränkt. Auch andere Behälter, wie Flaschen aus Glas oder PET oder dergleichen kommen in Betracht. Auch in diesen Fällen kann die Drohne dann bevorzugt in Form und/oder Gewicht oder anderen physikalischen Charakteristika ähnlich wie die Behälter ausgeführt sein.

Die einer gemessenen Beschleunigung und eines gemessenen Drucks entsprechenden Daten sind nicht notwendig identisch mit der gemessenen Beschleunigung oder dem gemessenen Druck. Vielmehr kann aus der gemessenen Beschleunigung oder zusätzlich erfassten Daten auch eine Position der Drohne durch eine Verarbeitung der von den Sensoren gewonnenen Messwerte erfolgen und diese dann als Daten an die Steuereinheit übermittelt werden. Alternativ kann die Beschleunigung oder der Druck auch genutzt werden, um davon ableitbare Größen zu erzeugen, die dann an die Steuereinheit in Form von Daten übergeben werden. In jedem Fall müssen die Daten also nicht identisch zu den gemessenen Werten für die Beschleunigung und den Druck sein, stellen aber üblicherweise Werte dar, die in irgendeiner Art physikalischen Parametern der Drohne oder ihrer Bewegung oder Betriebsparametern entspreche.

Bei den Betriebsparametern, die die Steuereinheit regelt, handelt es sich erfindungsgemäß um Betriebsparameter, die auch tatsächlich einen Einfluss auf die Beschleunigung und/oder den auf die Drohne einwirkenden Druck (oder andere physikalische Parameter der Bewegung) haben können. Dazu zählen beispielsweise die Antriebsmomente der die Transporteinrichtung antreibenden Motoren oder die Kraft, mit der Greifelemente Behälter greifen. Nicht dazu zählen Betriebsparameter, die auf die Drohne und/oder Behälter einwirkende Beschleunigung oder Druck keinen Einfluss haben, wie beispielsweise in einer Druckmaschine aufgebrachte Druckbilder oder die Zusammensetzung des in die Behälter eingefüllten Produktes.

Die Regelung des Betriebsparameters basierend auf dem Vergleich zwischen den von der Drohne empfangenen Daten und den gespeicherten Soll-Werten ist hier in der üblichen Bedeutung des Begriffs "Regeln" zu verstehen. Das bedeutet, die Steuereinheit ist dazu in der Lage, einen üblichen Regelkreis durchzuführen, bei dem der Betriebsparameter zunächst auf einen Ausgangswert eingestellt wird und abhängig von den entsprechenden Daten und dem Vergleich dieser Daten mit dem Soll-Wert ggf. eine Korrektur des Betriebsparameters erfolgt, sodass beispielsweise die gemessene Beschleunigung einem Soll-Wert der Beschleunigung entspricht. Anschließend wird durch die Drohne erneut die Beschleunigung und der Druck gemessen und entsprechende Daten ausgegeben und die Steuereinheit führt diesen Vergleich erneut durch, um festzustellen, ob zum einen die Regelung erfolgreich war und, wenn nicht, den Betriebsparameter erneut nachzuregeln.

Durch die Verwendung der Drohne, die die Beschleunigung und den auf die Drohne einwirkenden Druck misst, können Daten und Messungen gewonnen werden, die den tatsächlichen Begebenheiten für die Behälter innerhalb der Transporteinrichtung bzw. innerhalb der Behälterbehandlungsanlage entsprechen, bzw. diese wiedergeben. So kann die Steuereinheit direkten Rückschluss auf die tatsächlichen Umstände innerhalb der Transporteinrichtung ziehen und die Betriebsparameter bzw. der Betriebsparameter können gezielt und effektiv geregelt werden.

In einer Ausführungsform ist die Transporteinrichtung eine Transporteinrichtung zum Transport der Behälter in einem ungeordneten Massenstrom. Besonders bei solchen Transporteinrichtungen ist es mithilfe externer, also außerhalb der Transporteinrichtung angeordneter Sensoren nur schwer möglich, zuverlässige Aussagen über die in der Transporteinrichtung auf die einzelnen Behälter einwirkenden Kräfte zu treffen. Gerade hier zeichnet sich die Verwendung von Drohnen, die in dem Massenstrom mit den Behältern mittransportiert werden können, für die Regelung der Betriebsparameter besonders aus.

Ferner kann vorgesehen sein, dass die Steuereinheit einen der Transporteinrichtung zugeordneten Antrieb, abhängig von dem Vergleich regeln kann und/oder der Transporteinrichtung ein Begrenzungsgelände zugeordnet ist, das zwei sich gegenüberliegende Seitengeländer umfasst, wobei die Behälter in der Transporteinrichtung zwischen den Seitengeländern transportiert werden, und wobei die Steuereinheit ausgebildet ist, den Abstand der Seitengeländer abhängig von dem Vergleich zu regeln. Durch die Regelung des Antriebs der Transporteinrichtung kann in vorteilhafterweise die auf die Behälter und insbesondere die Drohne einwirkende Beschleunigung in der Transporteinrichtung verändert werden.

Begrenzungsgeländer kommen üblicherweise bei Transporteinrichtungen, die für den ungeordneten Massentransport der Behälter ausgelegt sind, zum Einsatz und beschränken die Breite der Transporteinrichtung und damit den bei gegebener Geschwindigkeit möglichen Durchsatz an Behältern. Durch Verstellen der Seitengeländer kann zum einen der Durchsatz erhöht werden und zum anderen kann der auf die einzelnen Behälter einwirkende Druck reduziert werden, da beispielsweise bei gleichbleibender Anzahl zugeführter Behälter mehr Behälter pro Zeiteinheit die Transporteinrichtungen passieren können, so dass der Staudruck der nachfolgenden Behälter geringer ist.

Durch diese Ausführungsform können Beschädigungen der Behälter vermieden werden.

Weiterhin kann vorgesehen sein, dass die Behälterbehandlungsanlage eine Einschleuseeinrichtung zum Einschleusen einer Drohne in die Transporteinrichtung und stromab der Einschleuseeinrichtung eine Ausschleuseeinrichtung zum Ausschleusen der Drohne umfasst, wobei die Ausschleuseeinrichtung mit einem Detektor verbunden ist, der die Drohne in der Transporteinrichtung erkennen und von den übrigen Behältern unterscheiden kann. So kann gezielt der Transport mehrerer Drohnen gleichzeitig durch die Transporteinrichtung realisiert werden, wobei die Drohnen an geeigneten Stellen, beispielsweise vor Eintritt in einer Behälterbehandlungsmaschine oder vor Passieren einer Inspektionseinrichtung gezielt ausgeschleust werden. Die Ausschleuseeinrichtung kann dazu Greifer oder Pusher oder andere für das individuelle Ausleiten von Behältern geeignete Vorrichtungen umfassen. Der Detektor kann beispielsweise eine magnetische oder eine optische Markierung auf der Drohne erkennen und anhand dieser die Drohne identifizieren. Basierend auf dem Identifizieren einer Drohne in der Transporteinrichtung durch den Detektor kann dann die Ausschleuseeinrichtung entsprechend gesteuert werden, die Drohne aus der Transporteinrichtung zu entfernen.

Es kann ferner vorgesehen sein, dass die Steuereinheit ein neuronales Netz umfasst oder der Steuereinheit ein neuronales Netz zugeordnet ist, das ausgebildet ist, basierend auf einer Vielzahl von Vergleichen zwischen von der Drohne empfangenen Daten und im Speicher gespeicherten Soll-Werten für den Betriebsparameter und/oder die Beschleunigung und/oder den Druck ein Optimierungsverfahren für die Regelung des Betriebsparameters zu erlernen.

Dieses Erlernen des Optimierungsverfahrens kann beispielsweise auf dem Auswerten der Erfolgsquote einzelner Regelungen basieren. Die Erfolgsquote oder allgemein der Erfolg kann dabei an dem Unterschied zwischen einem vor einem bestimmten Regelvorgang gemessenen Wert für die Beschleunigung/oder den Druck und einem nach der entsprechenden Regelung gemessenen Wert für die Beschleunigung und/oder den Druck ermittelt werden. Je größer die Differenz oder je größer die Differenz zwischen der nach der Regelung gemessenen Beschleunigung/ dem Druck zum angestrebten Soll-Wert sind, desto schlechter kann der Erfolg bewertet werden.

Aus hohen Erfolgswerten bzw. Erfolgsquoten kann das neuronale Netz dann lernen, dass die entsprechenden Änderungen an dem Betriebsparameter sich bei gegebenen Verhältnissen von Beschleunigung und/oder Druck oder anderen Größen, die auf den Behälter einwirken, als besonders vorteilhaft erweisen und dies bei der Optimierung der Regelung der Betriebsparameter berücksichtigen.

Dadurch wird erreicht, dass die Regelzyklen, die nötig sind, um den Betriebsparameter und/oder die Beschleunigung und/oder den Druck auf den gewünschten Wert zu regeln, reduziert werden können.

Weiterhin kann vorgesehen sein, dass die Drohne ein System zur Positionsbestimmung in der Transporteinrichtung umfasst und eine aktuelle Position der Drohne zusammen mit den Daten an die Steuereinheit übertragen kann und wobei die Steuereinheit ausgebildet ist, einen Betriebsparameter einer Komponente der Behälterbehandlungsanlage, der Einfluss auf die Beschleunigung der Drohne und/oder den auf die Drohne einwirkenden Druck in einer aktuellen Position der Drohne in der Transporteinrichtung hat, zu regeln. Die Komponente kann dabei beispielsweis eine bestimmte Halterung oder ein bestimmter Standteller mit der zugeordneten Zentriereinrichtung sein oder aber auch ein Motor, der einem bestimmten Teil einer Transporteinrichtung zugeordnet ist. Indem bei der Regelung auch die Position der Drohne einfließt, kann gezielt die entsprechende Komponente nachgeregelt werden, so dass überflüssiges Regeln von Betriebsparametern in anderen Teilen der Transporteinrichtung und/oder der Behälterbehandlungsanlage entfallen kann.

Ferner kann die Steuereinheit in der Drohne oder außerhalb der Drohne angeordnet sein.

Ist die Steuereinheit in der Drohne angeordnet, kann es sich um eine Ausführung handeln, bei der lediglich ein Prozessor, eine geeignete Speichereinheit und eine Datenübertragungseinrichtung innerhalb der Drohne angeordnet sind, die ausgebildet sind, bestimmte Komponenten der Behälterbehandlungsanlage, beispielsweise in unmittelbarer Umgebung, anzusteuern und basierend auf den gemessenen Daten zu regeln. In einer solchen Ausführungsform bedeutet das Übertragen der Daten entsprechend einer gemessenen Beschleunigung und eines gemessenen Druckes an die Steuereinheit lediglich, dass die von den Sensoren gemessenen Werte an die Steuereinheit in der Drohne "gesendet" werden, beispielsweise über Kabelverbindungen. Die Übertragung findet in diesem Fall nicht von der Drohne an eine irgendwie außerhalb der Drohne angeordnete Einrichtung statt, sondern erfolgt lediglich mithilfe von Datenübertragungsmitteln innerhalb der Drohne selbst.

Ist die Steuereinheit außerhalb der Drohne angeordnet, kann es sich bei der Steuereinheit beispielsweise um die zentrale Steuereinheit der gesamten Behälterbehandlungsanlage oder lediglich um eine der speziellen Transporteinrichtung zugeordnete Steuereinheit handeln. In diesem Fall bedeutet die Übertragung der Daten entsprechend dem gemessenen Druck und der gemessenen Beschleunigung beispielsweis eine drahtlose Übertragung der Daten mit üblichen Mitteln wie über Bluetooth oder W-LAN. Beide Ausführungsformen können je nach Zweckmäßigkeit verwendet werden, wobei das Vorsehen der Steuereinheit innerhalb der Drohne eine dezentrale Regelung der Betriebsparameter ermöglicht, so dass die üblicherweise vorgesehene zentrale Steuereinheit der Behälterbehandlungsanlage lediglich den "groben" Betrieb der Behälterbehandlungsanlage steuert und regelt, wohingegen die spezifische und hoch genaue Regelung der Betriebsparameter durch die einzelnen Steuereinheiten der Drohnen durchgeführt wird. Die Verwendung einer Steuereinheit außerhalb der Drohne kann die Anschaffungskosten der Behälterbehandlungsanlage reduzieren und erlaubt eine zentrale Datenverarbeitung und damit ggf. einen leichteren Zugriff auf die Daten durch einen Bediener.

Das erfindungsgemäße Regelverfahren für einen Betriebsparameter einer Behälterbehandlungsanlage in der getränkeverarbeitenden Industrie, wobei die Behälterbehandlungsanlage wenigstens eine Transporteinrichtung zum Transportieren der Behälter und eine in die Transporteinrichtung einbringbare Drohne umfasst, wobei die Behälterbehandlungsanlage eine Steuereinheit ausgebildet zur Regelung wenigstens eines Betriebsparameters und eine der Steuereinheit zugeordnete Speichereinrichtung ausgebildet zum Hinterlegen von Soll-Werten für den wenigstens einen Betriebsparameter umfasst, wobei die Drohne einen Beschleunigungssensor umfasst, der eine auf die Drohne wirkende Beschleunigung misst und einen Drucksensor umfasst, der einen auf die Drohne einwirkenden Druck in der Transporteinrichtung misst, umfasst, dass die Drohne Daten entsprechend einer gemessenen Beschleunigung und eines gemessenen Drucks an eine Steuereinheit überträgt und die Steuereinheit wenigstens einen Betriebsparameter, der die Beschleunigung der Drohne und/oder den auf die Drohne einwirkenden Druck beeinflusst, abhängig von einem Vergleich zwischen den von der Drohne empfangenen Daten und in der Speichereinrichtung gespeicherter Soll-Werte für den Betriebsparameter und/oder die Beschleunigung und/oder den Druck, regelt.

Eine zeitsparende und effektive genaue Regelung von Betriebsparametern ist so möglich.

In einer Ausführungsform misst die Drohne die Beschleunigung und/oder den Druck kontinuierlich oder in zeitlichen Abständen von 10⁻³s bis 10⁻⁵s und überträgt die Daten an die Steuereinheit, wobei die Steuereinheit kontinuierlich oder in zeitlichen Abständen von 10⁻³s bis 10⁻⁵s den Betriebsparameter regelt. Ein permanent geregelter Betrieb der Behälterbehandlungsanlage kann so realisiert werden.

Es kann weiterhin vorgesehen sein, dass die Steuereinheit einen der Transporteinrichtung zugeordneten Antrieb abhängig von dem Vergleich regelt und/oder der Transporteinrichtung ein Begrenzungsgeländer zugeordnet ist, das zwei sich gegenüberliegende Seitengeländer umfasst, wobei die Behälter in der Transporteinrichtung zwischen den Seitengeländern transportiert werden und wobei die Steuereinheit den Abstand der Seitengeländer abhängig von dem Vergleich regelt. Eine gezielte Beeinflussung der Transportparameter der Behälter auch in Transporteinrichtungen für den Massentransport der Behälter in einem Massenstrom kann so erreicht werden.

Weiterhin kann vorgesehen sein, dass die Steuereinheit, abhängig von dem Vergleich feststellt, dass eine Reinigung und/oder eine Schmierung der Transporteinrichtung notwendig ist und ein entsprechendes Signal an einen Bediener und/oder eine automatische Reinigungseinrichtung oder Schmiereinrichtung zum Schmieren der Transporteinrichtung, die basierend auf dem Signal eine Reinigung und/oder eine Schmierung der Transporteinrichtung durchführt, ausgibt; und/oder die Steuereinheit stellt, abhängig von dem Vergleich und/oder der gemessenen Beschleunigung und/oder dem gemessenen Druck, einen Fehler bei dem Transport der Behälter fest und gibt ein entsprechendes Signal an einen Bediener und/oder eine Kontrolleinheit, wie einen Roboter aus, der den Fehler automatisch basierend auf dem Signal behebt. Zu diesen Fehlern zählen beispielsweise Glasbruch oder eine Behälterbeschädigung oder das unabsichtliche Austreten eines Behälters aus der Transporteinrichtung. Die dadurch entstehende Lücke führt üblicherweise zu einem Abfall des Staudrucks der Behälter im Massenstrom, was auch auf den auf die Drohne einwirkenden Druck Einfluss haben kann. Ein abrupter Druckabfall, wie dies bei den geschilderten Vorfällen auftritt, kann dann erkannt werden und die Kontrolleinheit kann beispielsweise den umgekippten Behälter aufrichten oder den beschädigten Behälter komplett aus der Transporteinrichtung entfernen. Auch mit dieser Ausführungsform wird eine gezielte Regelung des Transports der Behälter durch die Behälterbehandlungsanlage ermöglicht.

Es kann weiterhin vorgesehen sein, dass die Steuereinheit ein neuronales Netz umfasst, oder der Steuereinheit ein neuronales Netz zugeordnet ist, das basierend auf einer Vielzahl von Vergleichen zwischen von der Drohne empfangenen Daten und im Speicher gespeicherten Soll-Werten für den Betriebsparameter und/oder die Beschleunigung und/oder den Druck ein Optimierungsverfahren für die Regelung des Betriebsparameters erlernt und die Regelung des Betriebsparameters anhand des Optimierungsverfahrens optimiert. So kann die benötigte Zeit für das Regeln des Betriebsparameters bzw. die Anzahl notwendiger Regelungszyklen vorteilhaft reduziert werden.

In einer Ausführungsform besitzt die Drohne dieselbe äußere Form, wie die in der Transporteinrichtung transportierten Behälter. Die gemessenen Beschleunigungen und auf die Drohne einwirkenden Drücke repräsentieren somit möglichst genau den Zustand der umgebenen Behälter. Ferner beeinflusst die Präsenz der Drohne auf diese Art den Transport der Behälter nicht mehr als ein anstelle der Drohne transportierter Behälter, so dass die gemessenen Werte möglichst realistisch sind.

Weiterhin kann die Drohne im normalen Betrieb zusätzlich zu den von der Behälterbehandlungsanlage behandelten Behältern und mit diesen zusammen in der Transporteinrichtung transportiert werden. Hiermit wird eine Regelung des Betriebsparameters während des laufenden Betriebs, bevorzugt in Echtzeit, möglich.

In einer weiteren Ausführungsform ist vorgesehen, dass die Drohne ein System zur Positionsbestimmung in der Transporteinrichtung umfasst, und die Steuereinheit einen Betriebsparameter einer Komponente der Behälterbehandlungsanlage, der Einfluss auf die Beschleunigung der Drohne und/oder den auf die Drohne einwirkenden Druck in der aktuellen Position der Drohne in der Transporteinrichtung hat, regelt. Mit dieser Ausführungsform kann die gezielte Regelung lediglich der Komponenten der Behälterbehandlungsanlage bewirkt werden, die zu gegebener Zeit auch tatsächlich einen Einfluss auf die gemessene Beschleunigung bzw. den gemessenen Druck, die auf die Drohne einwirken, haben. Überflüssige Regelungen können so vermieden werden.

### Kurze Beschreibung der Figuren

- Fig. 1: zeigt eine Behälterbehandlungsanlage gemäß einer Ausführungsform;
- Fig. 2: zeigt eine Ausführungsform der Drohne;
- Fig. 3a bis 3e: zeigen Ausführungsformen von geregelten Komponenten und Betriebsparametern;
- Fig. 4: zeigt ein Flussschema eines Regelverfahrens gemäß einer Ausführungsform.

### Ausführliche Beschreibung

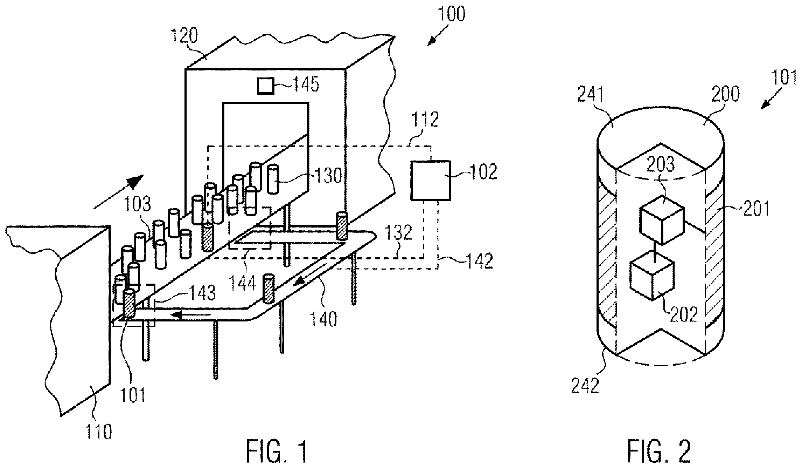

Fig. 1 zeigt eine Behälterbehandlungsanlage 100 gemäß einer Ausführungsform der Erfindung. In der hier dargestellten Ausführungsform umfasst die Behälterbehandlungsanlage eine erste Behälterbehandlungsmaschine 110 und eine zweite Behälterbehandlungsmaschine 120, die durch eine Transporteinrichtung 103 miteinander verbunden sind, so dass Behälter 130 aus der ersten Behälterbehandlungsmaschine 110 in Transportrichtung der Transporteinrichtung 103 in die zweite Behälterbehandlungsmaschine 120 transportiert werden können. Die Erfindung ist hinsichtlich der transportierten Behälter nicht beschränkt. Während Bezug auf Dosen als spezielle Ausführung der Behälter genommen wird, kommen auch sämtliche andere Behälter auch aus sämtlichen denkbaren Materialien, wie Dosen aus Metall oder Kunststoff, Becher aus Metall, Kunststoff oder Pappe, Flaschen aus Glas oder Kunststoff und ähnliches in Betracht.

Die hier dargestellte Transporteinrichtung 103 ist als Transportband vorgesehen, das zum ungeordneten Transport der Behälter 130 in einem Massenstrom ausgebildet ist. Dazu verfügt das Transportband üblicherweise über eine Breite, die deutlich größer ist als die Abmessungen der zu transportierenden Behälter in der Transportebene. Handelt es sich bei den zu transportierenden Behältern beispielsweise um Dosen für Getränke, die üblicherweise einen Durchmesser von einigen Zentimetern bis zu 10 cm und eine Höhe zwischen 10 und 20 cm aufweisen, so kann die Breite der Transportstrecke 103 einen Meter oder mehr betragen. Diese Breite der Transportstrecke ist nur beispielhaft und nicht beschränkend zu verstehen. Jedoch unterscheidet sich die Breite der hier dargestellten Transporteinrichtung 103 von einer Transporteinrichtung, die lediglich zum Transport der Behälter hintereinander ausgebildet ist, da in einem solchen Fall die Transporteinrichtung üblicherweise eine Breite aufweist, die entweder der Breite bzw. dem Durchmesser der Behälter, die in der Transporteinrichtung transportiert werden sollen entspricht oder nur geringfügig größer ist, so dass in keinem Fall zwei Behälter nebeneinander transportiert werden können.

Erfindungsgemäß umfasst die Behälterbehandlungsanlage 100 eine Steuereinheit 102, die zumindest zur Steuerung der Betriebsparameter der Transporteinrichtung 103 ausgebildet ist. Dazu zählt beispielsweise das Ansteuern des Antriebs oder der Antriebe der Transporteinrichtung, um die Transportgeschwindigkeit der Behälter 130 in der Transporteinrichtung zu steuern.

Ist die Transporteinrichtung als Transporteinrichtung zum individuellen Transport der Behälter ausgebildet, beispielsweise in Form von Stand- oder Drehtellern und mit diesen zusammenwirkenden Zentriereinrichtungen zum Zentrieren genau eines Behälters auf einem Standteller, so ist die Steuereinheit 102 ausgebildet, zumindest die Zentriereinrichtung und ggf. auch den Stand- oder Drehteller so zu steuern, dass der Behälter korrekt eingespannt wird. Dazu zählt beispielsweise die Steuerung des Abstands zwischen Standteller und Zentriereinrichtung in Abhängigkeit der Größe des Behälters, aber auch der Anpressdruck, mit dem die Zentriereinrichtung auf einen einzuspannenden Behälter gedrückt wird.

Zu diesem Zweck ist die Steuereinheit 102 mit einer Datenleitung 132 mit der Transporteinrichtung 103 bzw. mit den zu steuernden Komponenten (Antriebe, Zentriereinrichtung, Standteller oder ähnliches) verbunden und kann die Betriebsparameter, wie beispielsweise die Drehzahl des Antriebs oder die Anpresskraft der Zentriereinrichtung oder die Drehzahl des Drehtellers oder ähnliches steuern. Die Datenleitung kann dabei gewöhnliche LAN-Verbindungen, aber auch drahtlose Verbindungen, wie W-LAN umfassen.

Erfindungsgemäß werden zumindest in der Transporteinrichtung 103 aber ggf. auch durch eine der Behälterbehandlungsmaschinen 110 und 120 zusammen mit den übrigen Behältern 130 Drohnen 101 transportiert. Diese Drohnen umfassen erfindungsgemäß einen Beschleunigungssensor, der eine auf die Drohne beispielsweise in der Transporteinrichtung einwirkende Beschleunigung messen kann und weiterhin einen Drucksensor, der den auf die Drohne in der Transporteinrichtung einwirkenden Druck messen kann. Unter dem Druck soll im Folgenden jegliche Form von auf den Behälter selbst einwirkende Kraft verstanden werden, die von einer gerichteten Kraft, die in eine Bewegung der Drohne als ganzes umgesetzt wird, verschieden ist. Dazu zählt beispielsweise auch der "Anpress-Druck" einer Zentriereinrichtung oder die von anderen Behältern in der Transporteinrichtung 103 auf die Drohne 101 ausgeübte Kräfte. In einer Transporteinrichtung, die die Behälter 130 in Form eines Massenstroms transportiert, erfährt eine Drohne analog zu einem Behälter einen Druck von den übrigen Behältern in Form des sogenannten "Staudrucks".

Die Drohne ist ferner ausgebildet, Daten, entsprechend der gemessenen Beschleunigung und/oder des gemessenen Drucks zu erzeugen. Dazu zählt beispielsweise, die von den Sensoren gemessene Beschleunigung/Druck in ein geeignetes Signal zu übersetzen, das dann über eine Datenverbindung 112 (bevorzugt Bluetooth-Verbindung oder W-LAN-Verbindungen) an die Steuereinheit 102 übertragen werden kann.

Hier müssen die Daten jedoch nicht identisch mit oder korrespondierend zu der gemessenen Beschleunigung und dem gemessenen Druck sein. Vielmehr kann die Drohne auch bereits vor der Übertragung von Daten an die Steuereinheit 112 eine Verarbeitung der gemessenen Beschleunigung bzw. des gemessenen Drucks vornehmen. Beispielsweise kann aus einer gemessenen Beschleunigung die auf die Drohne einwirkende Kraft berechnet werden und diese dann in Form von Daten an die Steuereinheit übertragen werden. Ferner kann die Drohne anhand der beispielsweise über eine gewisse Zeit gemessenen Beschleunigung ein Geschwindigkeitsprofil ihrer Bewegung erstellen und dieses Geschwindigkeitsprofil anstelle der Beschleunigung an die Steuereinheit 102 übertragen. Analoges gilt für den gemessenen Druck. So kann die Drohne beispielsweise gemessene Werte für den Druck, der von allen Seiten auf die Drohne einwirkt, zu einer Druckfunktion zusammenfassen, die den Druck in Abhängigkeit des betreffenden Ortes auf der Oberfläche der Drohne, auf den dieser Druck einwirkt, angibt. Dies kann genutzt werden, um festzustellen, ob der Druck beispielsweise in einer Zentriereinrichtung und während des Einspannens der Drohne zwischen einem Standteller und der Zentriereinrichtung von oben bzw. unten wirkt, oder ob der Staudruck in einem Massentransporteur aus allen Richtungen gleich ist. Entsprechende Daten können dann an die Steuereinheit 112 übermittelt werden.

Erfindungsgemäß ist die Steuereinheit 112 ausgebildet, anhand der Daten der Drohne zumindest einen Betriebsparameter der Transporteinrichtung oder allgemeiner, einen Betriebsparameter, der die auf die Drohne einwirkende Beschleunigung und/oder den auf die Drohne einwirkenden Druck beeinflussen kann, zu regeln. Zu diesem Zweck kann der Steuereinheit 102 eine Speichereinrichtung zugeordnet sein, in der Soll-Werte beispielsweise für den Betriebsparameter, aber auch für die Beschleunigung und/oder den Druck hinterlegt sein können. Nach Empfang der Daten von der Drohne vergleicht die Steuereinheit die gewonnenen Daten mit den Soll-Werten. Ergibt sich eine Diskrepanz (beispielsweise eine Differenz zwischen gemessener Beschleunigung und Soll-Wert), kann der Betriebsparameter oder die Betriebsparameter so gesteuert werden, dass beispielsweise die auf die Drohne einwirkende Beschleunigung oder der auf die Drohne einwirkende Druck dem Soll-Wert angepasst wird. So kann z.B. der Anpressdruck einer Zentriereinrichtung, der auf die Drohne einwirkt, wenn sie auf dem Standteller positioniert ist, vergrößert oder verringert werden, je nachdem, ob der gemessene Druck größer oder kleiner als der Soll-Wert ist. In diesem Fall ist der zu regelnde Betriebsparameter der von der Zentriereinrichtung auf den Behälter bzw. auf die Drohne ausgeübte Anpressdruck und damit beispielsweise das Drehmoment eines mit der Zentriereinrichtung verbundenen Motors oder Antriebs, der für das Erzeugen des Anpressdrucks gesteuert wird.

Analog kann beispielsweise das Geschwindigkeitsprofil einer Transporteinrichtung verändert werden, um die auf die Drohne einwirkende Beschleunigung an den Soll-Wert für die Beschleunigung anzugleichen.

Dies erfolgt in Form eines üblichen Regelkreises. Dazu kann die Drohne 101 ausgebildet sein, entweder kontinuierlich die Beschleunigung und/oder den Druck zu messen, um die entsprechenden Daten an die Steuereinheit zu übermitteln oder das Messen von Beschleunigung und Druck kann auch nur in bestimmten zeitlichen Abständen erfolgen. Beispielsweise kann die Drohne die Beschleunigung und/oder den Druck in zeitlichen Abständen von 10⁻³s bis 10⁻⁵s messen und entsprechende Daten an die Steuereinheit 102 übermitteln. Die Steuereinheit kann dann entweder ebenfalls kontinuierlich oder entsprechend der Zeitintervalle, in denen die Steuereinheit Daten von der Drohne empfängt, die Regelung des Betriebsparameters vornehmen.

In Fig. 1 ist ebenfalls die Einrichtung 140 dargestellt, die in einer Ausführungsform das Ausschleusen und Einschleusen von Drohnen in die Transporteinrichtung 103 realisiert. Sie ist hier nur schematisch als Transportband dargestellt, das die Drohnen vor Eintritt in die Behälterbehandlungsmaschine 120 aus der Transporteinrichtung 103 entfernt und in der Transporteinrichtung der Behälter 130 entgegengesetzten Richtung zurückführt, um die Drohnen dann nach der Behälterbehandlungsmaschine 110 wieder in die Transporteinrichtung 103 einzuschleusen. Die Einrichtung 140 kann als Transportband oder andere Einrichtung ausgebildet sein und eine Pufferwirkung realisieren, so dass eine Vielzahl von Drohnen in dieser Einrichtung 140 gespeichert werden kann.

Die gestrichelt gekennzeichneten Bereiche 143 und 144 stellen schematisch eine Einschleuseeinrichtung 143 und eine Ausschleuseeinrichtung 144 dar. Die Einschleuseeinrichtung ist dabei geeignet und ausgebildet, eine Drohne 101 in die Transporteinrichtung einzubringen, bevorzugt ohne dass ein Behälter 130 aus der Transporteinrichtung 103 in die Einschleuseeinrichtung eindringen kann und bevorzugt auch ohne dass der Transport der Behälter in der Transporteinrichtung 103 gestört wird. Die Ausschleuseeinrichtung 144 ist geeignet, bevorzugt selektiv Drohnen aus der Transporteinrichtung zu entfernen, aber die übrigen Behälter 130 in der Transporteinrichtung zu belassen. Zu diesem Zweck kann die Ausschleuseeinrichtung beispielsweise als Greifer oder Pusher ausgebildet sein, der eine Drohne aus der Transporteinrichtung entfernen kann. Ein Detektor 145, der beispielsweise unmittelbar vor Eintritt der Behälter 130 in die Behälterbehandlungsmaschine 120 angeordnet ist, kann vorgesehen sein, um die Drohnen 101 eindeutig zu erkennen und insbesondere von den übrigen Behältern zu unterscheiden. Erkennt der Detektor 145 eine Drohne 101 in der Transporteinrichtung, kann er entweder selbst oder durch Ausgabe eines entsprechenden Signals an die Steuereinheit 102 die Ausschleuseeinrichtung 144 steuern, die identifizierte Drohne aus der Transporteinrichtung 103 zu entfernen.

Die beschriebene Einschleuseeinrichtung und Ausschleuseeinrichtung 143 bzw. 144 ist in dieser Ausführungsform nicht zwingend und kann auch auf andere Weise realisiert werden. Insbesondere ist es nicht notwendig, dass die Drohne lediglich in der Transporteinrichtung 103 zwischen zwei Behälterbehandlungsmaschinen 110 und 120 mit den übrigen Behältern mitgeführt wird. Sie kann auch eine oder mehrere Behälterbehandlungsmaschinen zusammen mit den Behältern 130 durchlaufen und erst anschließend aus dem Strom der Behälter entfernt werden.

Fig. 2 zeigt eine Drohne 101 gemäß einer Ausführungsform, wie Sie bereits mit Bezug auf Fig. 1 beschrieben wurde. Die Drohne umfasst einen Drohnenkörper 200, der beispielsweise die äußere Form einer Dose haben kann. Abhängig von den in der Transporteinrichtung oder in der Behälterbehandlungsanlage allgemein vorhandenen Behältern, kann die äußere Form 200 der Drohne entsprechend angepasst sein. Werden beispielsweise Dosen mit der Behälterbehandlungsanlage verarbeitet, kann die äußere Form der Drohne der dieser Dosen entsprechen. Es kann auch vorgesehen sein, dass die Drohne 101 nicht nur hinsichtlich äußerer Form, sondern auch hinsichtlich anderer physikalischer Eigenschaften wie Masse und Reibungskoeffizient der Oberfläche den eigentlichen Behältern 130 entspricht. Dies ist jedoch nicht zwingend.

In der in Fig. 2 dargestellten Ausführungsform umfasst die Drohne in ihrem Inneren einen Beschleunigungssensor 202 zum Messen einer auf die Drohne 101 einwirkenden Beschleunigung. Dieser Beschleunigungssensor 202 kann zum Messen von Beschleunigungen in allen drei Raumrichtungen, aber auch zum Messen von Rotationsgeschwindigkeiten und damit einhergehenden Drehmomenten, die auf die Drohne 101 einwirken, ausgebildet sein. Der Beschleunigungssensor muss dabei nicht als einzelner Sensor ausgebildet sein, sondern kann auch mehrere spezialisierte Beschleunigungssensoren umfassen. Diese Beschleunigungssensoren können beispielsweise durch eine erste Gruppe von Sensoren gebildet werden, die translatorische Beschleunigungen (nach oben, nach unten bzw. in Transportrichtung oder quer zur Transportrichtung) messen und eine zweite Gruppe von Beschleunigungssensoren, die auf die Drohne 101 einwirkende Drehmomente messen. Grundsätzlich können die Beschleunigungssensoren in bekannter Art ausgebildet sein. Es kann sich beispielsweise um Gyroskope, magnetisch stabilisierte Massen und mikroelektromechanische Systeme handeln. Sämtliche bekannte Beschleunigungssensoren können hier eingesetzt werden.

Weiterhin umfasst die Drohne 101 einen Drucksensor 201, der auf die Drohne 101 einwirkende Drücke messen kann. Der Drucksensor ist hier beispielhaft als ein die Umfangsfläche der Drohne 101 vollständig umfließender Sensor ausgebildet. Dieser kann also sämtliche von der Seite auf eine stehende Drohne in der Transporteinrichtung einwirkende Kräfte (Druck) messen. Vorteilhaft umfasst die Drohne weiterhin einen Drucksensor, der den Auflagedruck auf der Transporteinrichtung (also nach unten gerichtet) messen kann und weiterhin einen Sensor, der den von oben auf die Drohne 101 einwirkenden Druck misst. Die Bezeichnung "oben" und "unten" gilt natürlich nur für den Fall, dass der Transport der Drohne stehend erfolgt, so dass tatsächlich ein "von oben" bzw. "von unten" einwirkender Druck vorhanden ist. Allgemein kann vorgesehen sein, dass die Drohne 101 auch an Ihrer Grundfläche 242, bzw. an ihrer Deckfläche 241 einen Drucksensor umfasst, bzw. sich der Drucksensor 201 auch in diesen Bereich erstreckt. Auch hier können sämtliche bekannte Sensoren, die geeignet sind, den auf eine Fläche der Drohne 101 einwirkenden Druck, bzw. die auf diese Fläche einwirkende Kraft zu messen zum Einsatz kommen. Es kommen insbesondere Sensoren infrage, die über einen Bereich der Kraft von 10⁻³N bis 10N eine möglichst genaue Messung mit einer Genauigkeit von +/- 2×10⁻³N gewährleisten können.

Weiterhin umfasst die Drohne 101 bevorzugt eine Prozessoreinheit 203. Diese kann durch einen Prozessor, eine Speichereinheit und ggf. zusätzlich einen Sender zum Übertragen von Daten gebildet sein. Die Prozessoreinheit 203 kann auch als eine Steuereinheit ausgebildet und in der Lage sein, die Regelungsfunktion der Steuereinheit 102 (siehe Fig. 1) entweder teilweise oder vollständig zumindest für die Transporteinrichtung 103 und ihren Antrieb auszuführen. In jedem Fall kann die Prozessoreinheit 203 die von den Beschleunigungssensoren und Drucksensoren gemessenen Werte in entsprechende Daten umwandeln, die dann an eine Steuereinheit 102 übertragen werden können. Ist vorgesehen, dass die Prozessoreinheit 203 selbst die Steuereinheit darstellt oder die Regelungsfunktionen, wie sie beispielsweise mit Bezug auf Fig. 1 beschrieben wurden, durchführt, so ist das "Übertragen" der Daten lediglich so zu verstehen, dass diese intern innerhalb der Drohne verarbeitet werden.

Die Drohne 101 kann auch weitere Sensoren, insbesondere Temperatursensoren und Feuchtigkeitssensoren oder ähnliches umfassen, um zusätzlich zu den auf die Drohne einwirkenden Beschleunigungen und Drücken, weitere Parameter zu messen, die die Luftfeuchtigkeit im Bereich einer Transporteinrichtung oder im Bereich einer Behälterbehandlungsmaschine oder die Temperatur in diesen Bereichen betreffen.

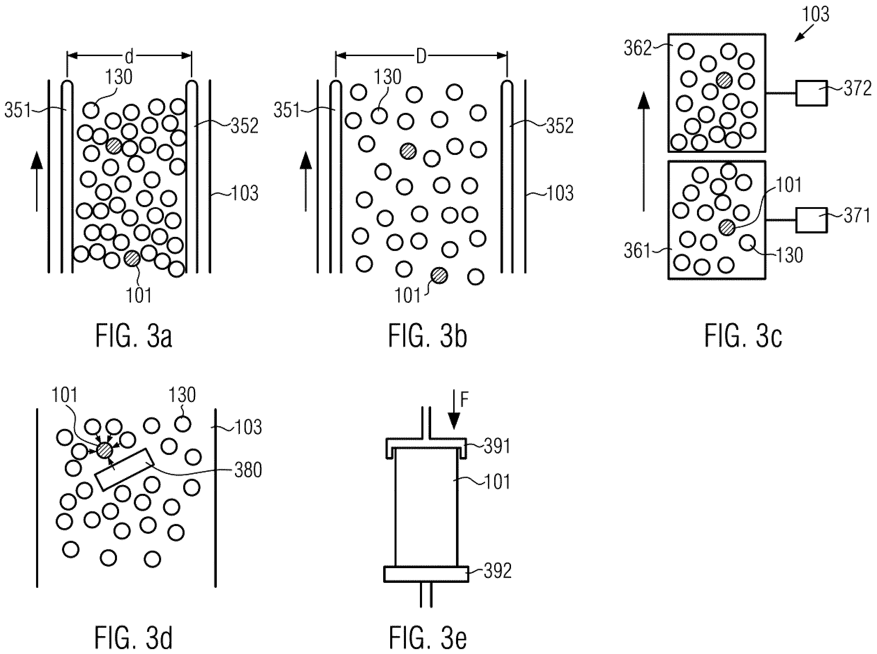

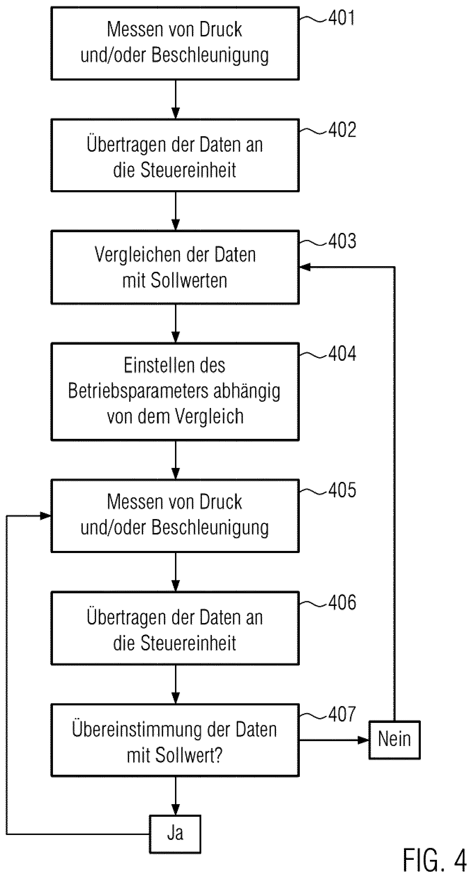

Die Fig. 3a bis 3e zeigen Ausführungsformen hinsichtlich der Steuerung von Komponenten bzw. Betriebsparametern durch die Steuereinheit in Abhängigkeit der von der Drohne 101 erhaltenen Daten. Im Folgenden wird lediglich Bezug darauf genommen, dass die Steuereinheit den Betriebsparameter durch Steuerung beispielsweise der Bewegung oder anderer Parameter einer Komponente der Behälterbehandlungsanlage einstellt. Es versteht sich, dass dies in Form des Regelzyklus, wie dieser mit Bezug auf Fig. 1 beschrieben wird und auch noch mit Bezug auf Fig. 4 ausgeführt wird, erfolgt. Weiterhin ist immer implizit ein Vergleich mit einem Soll-Wert des entsprechenden Betriebsparameters, der Beschleunigung oder des auf die Drohne einwirkenden Druckes vorgesehen, um überhaupt eine Regelung zu gewährleisten. In diesem Sinne stellen die Fig. 3a bis 3e nur schematisch dar, wie durch die Messung der Beschleunigung und des Druckes mithilfe der Drohne 101 Eigenschaften der Behälterbehandlungsanlage verändert werden können, um die für die Behälter 130 angestrebten Bedingungen zu schaffen.

In Fig. 3a ist ein Massentransporteur 103 gezeigt, in dem die Behälter 130 zusammen mit den Drohnen 101 in einem Massenstrom transportiert werden. Die Breite des Bereichs der Transporteinrichtung 103, in dem die Behälter 130 transportiert werden, ist definiert durch den Abstand d zweier Seitengeländer 351 und 352, die zusammen ein Begrenzungsgeländer bilden. Die Breite d definiert zusammen mit der Transportgeschwindigkeit der Behälter in der Transporteinrichtung 103 den Durchsatz an Behältern 130, der mit der Transporteinrichtung erreicht wird. Durch die Transportgeschwindigkeit und die zur Verfügung stehende Breite d stauen sich ggf. die Behälter 130 auf, sodass sie einen im Wesentlichen von allen Seiten gleichen Staudruck aufeinander ausüben. Dies bedeutet, dass die Drohnen 101 (in der Fig. 3a schwarz dargestellt) von allen Seiten einen Druck erfahren, der von dem Drucksensor gemessen werden kann. Übersteigt dieser Druck einen bestimmten Grenzwert oder einen angestrebten Soll-Wert, beispielsweise 0,05N pro Quadratzentimeter, so kann die Steuereinheit (siehe beispielsweise Fig. 1) den Abstand der Seitengeländer 351 und 352 so steuern, dass der neu eingestellte Abstand D größer ist als der Abstand d. In diesem Fall ist der Abstand d bzw. D als Betriebsparameter anzusehen, der, wenn auch nur indirekt, auf den von einem Behälter erfahrenen Druck Einfluss hat. So wird erreicht, dass bei gleichbleibender Transportgeschwindigkeit der Behälter der Durchsatz durch die Transporteinrichtung vergrößert wird. Dies verringert gleichzeitig den auf die Behälter einwirkenden Staudruck. Analoges gilt natürlich, wenn der Staudruck zu gering ist oder der Staudruck identisch 0 ist. In diesem Fall berühren sich die einzelnen Behälter in der Transporteinrichtung praktisch nicht und es kann die Gefahr bestehen, dass die Behälter dadurch umkippen. Dann kann die Steuereinheit den Abstand zwischen den Seitengeländern 351 und 352 reduzieren, um so den erreichbaren Durchsatz zu verringern und damit bei gleichbleibender Transportgeschwindigkeit den Staudruck zu erhöhen.

Alternativ zur Veränderung des Abstands der Seitengeländer 351 und 352 oder zusätzlich dazu, kann die Steuereinheit auch ausgebildet sein, die Transportgeschwindigkeit der Behälter in der Transporteinrichtung, beispielsweise durch Ansteuerung des Antriebs der Transporteinrichtung zu erhöhen oder zu verringern.

Fig. 3c zeigt hierzu eine speziellere Ausführungsform, bei der die Behälter 130 zusammen mit den Drohnen entlang des dargestellten Pfeils auf zwei Transportbändern 361 und 362 transportiert werden. Die Transportbänder werden jeweils durch einzelne Antriebe 371 und 372 angetrieben. Solche Transportbänder werden üblicherweise genutzt, um Behälter 130 auf Abstand zu bringen, wenn sich das in Transportrichtung stromab befindliche Transportband 362 schneller bewegt, als das Transportband 361. Analog kann der Abstand der Behälter verringert werden, wenn das Transportband 362 einen langsameren Transport (entsprechend langsamerer Geschwindigkeit) bewirkt, als das erste Transportband 361.

Durch die unterschiedlichen Transportgeschwindigkeiten wirkt beim Übertritt vom ersten auf das zweite Transportband eine Beschleunigung auf die Behälter. Diese kann von den Beschleunigungssensoren der Drohne gemessen werden. Abhängig von den gemessenen Werten kann dann beispielsweise die Geschwindigkeitsdifferenz zwischen den Transportbändern 361 und 362 so von der Steuereinheit 102 eingestellt werden, dass die auf die Behälter einwirkenden Beschleunigungen beispielsweise einen bestimmten Minimalwert nicht unterschreiten und einen bestimmten Maximalwert nicht überschreiten, um das unabsichtliche Aufstauen von Behältern zu verhindern und gleichzeitig ein unabsichtliches Umstürzen von Behältern zu vermeiden. Dabei kann die Steuereinheit ausgebildet sein, entweder nur einen der Antriebe 371 oder 372 zu steuern, um dessen Betriebsparameter (Antriebsgeschwindigkeit, Drehmoment oder ähnliches) abhängig von den von der Drohne 101 erhaltene Daten zu steuern oder die Steuereinheit 102 kann beiden Antriebe 371 und 372 steuern.

Fig. 3d zeigt einen weiteren Fall, bei dem die Behälter 130 zusammen mit den Drohnen 101 in einem Massentransporteur 103 transportiert werden. Während dieses Transports kann es beispielsweise aufgrund zu geringen Staudrucks dazu kommen, dass ein Behälter umkippt. Weiterhin kann auch aufgrund von zu hohem Staudruck eine in dem Massentransporteur transportierte Flasche beschädigt oder zerstört werden. Beides kann zu einer abrupten Änderung im Staudruck führen, sodass der auf die Drohne 101 mit den dargestellten Pfeilen einwirkende Staudruck nicht mehr gleichmäßig ist, bzw. sich der auf die Drohne 101 einwirkende Druck abrupt ändert. In diesem Fall kann die Steuereinheit anhand der von der Drohne 101 erhaltenen Daten erkennen, dass ein Problem in der Transporteinrichtung vorliegt.

Sie kann dann beispielsweise ein Signal an einen Bediener ausgeben, dass ein solches Problem wie beispielsweise ein umgestürzter oder beschädigter Behälter vorliegt, oder die Steuereinheit kann eine Kontrolleinheit steuern, die diesen Fehler (umgestürzter oder beschädigter Behälter oder ähnliches) behebt, indem sie beispielsweise den umgestürzten Behälter 380 aus der Transporteinrichtung 103 entfernt. Zu diesem Zweck kann zusätzlich zu den Drohnen 101 vorgesehen sein, dass der Transporteinrichtung ein oder mehrere optische Sensoren zugeordnet sind, die einen umgestürzten oder beschädigten Behälter 380 erkennen können. Hier können gängige Bilderkennungsverfahren zum Einsatz kommen. Wird durch die Daten der Drohne 101 erkannt, dass ein Behälter umgestürzt oder beschädigt sein muss, kann mithilfe dieser optischen Sensoren dieser Behälter lokalisiert und geeignete Maßnahmen durchgeführt werden, wie beispielsweise einen Roboterarm zu steuern, der den umgestürzten Behälter oder den beschädigten Behälter 380 aus der Transporteinrichtung 103 entfernt.

In Fig. 3e ist eine Ausführung dargestellt, bei der ein Behälter bzw. hier die Drohne 101 auf einem Standteller 392 positioniert ist und von einer Zentriereinrichtung 391 durch die von oben auf die Drohne 101 einwirkende Kraft fixiert wird, sodass die Position der Drohne relativ zum Standteller 392 und zur Zentriereinrichtung 391 fest ist. Bei dem Standteller 392 kann es sich auch um einen Drehteller handeln, der zusammen mit der Zentriereinrichtung in Drehung versetzt werden kann, sodass der Behälter entlang der entsprechenden Rotationsachse gedreht wird. Zum einen kann vorgesehen sein, dass die Drohne 101, die bei der Drehung auf sie einwirkende Beschleunigung (Drehmoment) misst und die entsprechenden Daten an die Steuereinheit überträgt, die dann feststellen kann, ob die erreichte Drehgeschwindigkeit oder die wirkenden Drehmomente einer Regelung bedürfen und beispielsweise vergrößert oder verringert werden müssen. Zusätzlich oder alternativ kann die Drohne die von der Zentriereinrichtung 391 auf sie bewirkte Anpresskraft F (entsprechend einem Anspressdruck) messen und entsprechende Daten an die Steuereinheit übertragen. Abhängig von diesen Daten kann die Steuereinheit dann feststellen, ob die Kraft F zu groß oder zu klein ist und einen Betriebsparameter der Zentriereinrichtung entsprechend regeln. Beispielsweise kann die Steuereinheit ein Drehmoment eines Antriebs der Zentriereinrichtung, dass letztlich die Anpresskraft F bewirkt, vergrößern oder verringern.

Fig. 4 ist ein Flussschema eines erfindungsgemäßen Regelverfahrens für einen Betriebsparameter einer Behälterbehandlungsanlage, wie dies mit Bezug auf die Fig. 1 bis 3 beschrieben wurde. Das in der Fig. 4 beschriebene Regelverfahren kann in jeder der bisher beschriebenen Ausführungsformen zur Anwendung kommen, da es auf jeden denkbaren Betriebsparameter und dessen Regelung, basierend auf von der Drohne erhaltenen Daten, angewendet werden kann.

Die im Folgenden zu beschreibenden Schritte 401 und 402 des Verfahrens werden üblicherweise nur bei der erstmaligen Durchführung, d.h. bei der überhaupt erstmaligen Messung von Druck und/oder Beschleunigung mithilfe der Drohne durchgeführt. Der eigentliche Regelvorgang, der von der bisher beschriebenen Steuereinheit durchgeführt wird, wird in den Schritten 403 bis 407 beschrieben. Das Verfahren der Fig. 4 kann daher während des fortschreitenden Betriebs um die Schritte 401 und 402 verkürzt werden, so dass im Wesentlichen nur noch der Regelzyklus in den Schritten 403 bis 407 durchgeführt wird.

Das Verfahren der Fig. 4 beginnt zunächst mit dem Schritt 401 währenddessen die Drohne gemäß einer der vorangegangenen Ausführungsformen den auf sie einwirkenden Druck und/oder eine auf sie einwirkende Beschleunigung in einer der vorstehend erläuterten Weisen bestimmt. Dies kann beispielsweise umfassen, dass die Drohne die auf Sie durch eine Zentriereinrichtung und einen Standteller bewirkte Kraft/Druck misst, oder dass die Drohne den von allen Seiten durch die übrigen Behälter in einer Transporteinrichtung zum Massentransport, wie sie mit der Transporteinrichtung 103 in der Fig. 1 beschrieben ist, misst. Daraus erzeugt die Drohne Daten entsprechend der Beschleunigung und/oder des Druckes, wobei, wie bereits erklärt, diese Daten nicht identisch zum gemessenen Druck und der gemessenen Beschleunigung sein müssen, sondern auch andere charakteristische Größen, wie eine gemessene Kraft, ein gemessenes Geschwindigkeitsprofil, abhängig von der Zeit und der Position der Drohne oder ähnliches betreffen.

Die Daten werden dann im Schritt 402 an die Steuereinheit übertragen. Diese Übertragung erfolgt üblicherweise kabellos in Form einer Bluetooth-Verbindung oder einer W-LAN-Verbindung zum Datenaustausch. Während diese Datenverbindung lediglich so ausgebildet sein muss, dass die Drohne die Daten an die Steuereinheit übertragen kann, also eine unidirektionale Verbindung von der Drohne zur Steuereinheit ausreichend ist, kann diese Datenverbindung auch bidirektional ausgebildet sein, sodass auch die Steuereinheit der Drohne Daten übermitteln kann.

Die empfangenen Daten werden in der Steuereinheit im Schritt 403 mit in einem Speicher der Steuereinheit oder einem anderweitig der Steuereinheit zugeordneten Speicher hinterlegten Soll-Werten für einen Betriebsparameter und/oder die auf die Drohne einwirkende Beschleunigung und/oder den auf die Drohne einwirkenden Druck verglichen. Dieser Vergleich kann im Wesentlichen in einer Differenzbildung von Soll-Wert und in den Daten enthaltenen Werten bestehen. So kann in dem Speicher ein Soll-Wert für die auf die Drohne einwirkenden Beschleunigungen beispielsweise in der Transportstrecke 103 gemäß der Fig. 1 oder insbesondere in den benachbarten Transportstrecken 361 und 362 gemäß der Fig. 3c hinterlegt sein. Die gemessene Beschleunigung, die also tatsächlich auf die Drohne einwirkt, kann dann mit dem gespeicherten Wert verglichen werden, sodass der gemessene Wert von dem Soll-Wert subtrahiert wird. Ist die Differenz kleiner als null, ist die gemessene Beschleunigung größer als der Soll-Wert. Ist die Differenz größer als null, ist sie kleiner als der Soll-Wert. Selbiges gilt natürlich für alle anderen Betriebsparameter und in den an die Steuereinheit von der Drohne übermittelten Daten enthaltenen Werte, wie beispielsweise die auf die Drohne einwirkende Kraft, die auf die Drohne einwirkende Drehmomente, der auf die Drohne einwirkende Druck und ähnliches. Sämtliche direkt gemessenen, aber auch aus den direkt gemessenen Größen abgeleitete Größen können mit Soll-Werten verglichen werden.

In Schritt 403 wird angenommen, dass der Vergleich von gemessenem Wert (auch bekannt als Ist-Wert) mit dem Soll-Wert zu einer von null verschiedenen Differenz führt, dass also der Ist-Wert vom Soll-Wert in irgendeiner Form abweicht.

Daher wird die Steuereinheit im nächsten Schritt 404 den für den entsprechenden Messwert relevanten Betriebsparameter entsprechend des Vergleichs einstellen, also die entsprechende Komponente der Behälterbehandlungsanlage ansteuern und ihren Betrieb ändern. Beispielsweise kann im Fall der Fig. 3a und 3b die Drohne einen auf sie bewirkten Druck messen, der größer als ein angegebener Soll-Wert ist. Dies wäre der Fall, der mit Bezug auf Fig. 3a beschrieben wurde. Die Steuereinheit wird dann die Seitengeländer 351 und 352 in einen Abstand zueinander bringen, der größer als der ursprüngliche Abstand ist, sodass sich der Druck, der auf die Drohne einwirkt, verringert.

Im nächsten Schritt 405 wird dann von der Drohne erneut der auf die Drohne einwirkende Druck oder die auf die Drohne einwirkende Beschleunigung gemessen und im Schritt 406 entsprechende Daten (siehe hierzu die Beschreibung zum Schritt 402) an die Steuereinheit übertragen.

In einem Zwischenschritt 407, der implizit auch im Schritt 403 enthalten ist, wird bestimmt, ob die Daten mit einem Soll-Wert übereinstimmen, ob also beispielsweise die in Schritt 404 erfolgte Einstellung des Betriebsparameters dazu geführt hat, dass ein auf die Drohne einwirkender Druck dem Soll-Wert entspricht.

Ist dies der Fall, so wird vom Schritt 407 zum Schritt 405 zurückgekehrt und der Druck und/oder die Beschleunigung auf die Drohne werden erneut gemessen und entsprechend dem Schritt 406 an die Steuereinheit übertragen.

Wird im Schritt 407 hingegen festgestellt, dass die Daten nicht mit den Soll-Werten übereinstimmen, wird zum Schritt 403 zurückgekehrt, wobei ein Vergleich (also eine Differenzbildung) erfolgt und abhängig von diesem Vergleich bzw. der Differenz dann im Schritt 404 der Betriebsparameter abhängig von dem Vergleich eingestellt wird.

Das Verfahren setzt sich dann erneut mit den Schritten 405 bis 407 fort, und es wird erneut überprüft, ob die Daten mit den Soll-Werten übereinstimmen.

Es versteht sich, dass die Schritte 403 und 407 auch zusammengefasst werden können, da bei einer Differenzbildung von gemessenem Wert und Soll-Wert stets festgestellt werden kann, ob der gemessene Wert mit dem Soll-Wert "übereinstimmt". In dieser Zusammengefassten Variante, bei der der Schritt 407 nicht nur das Bestimmen einer Übereinstimmung, sondern zusätzlich das Erstellen des Vergleichs gemäß Schritt 403 enthält, wird das Verfahren dann unmittelbar am Schritt 404, also der Einstellung des Betriebsparameters abhängig von dem Vergleich fortgesetzt.

Bei der Bestimmung des Vergleichs zwischen den gemessenen Daten und den Soll-Werten kann vorgesehen sein, dass eine Übereinstimmung von Soll-Wert und gemessenen Daten angenommen wird, wenn die Differenz zwischen gemessenen Daten und Soll-Wert eine bestimmte Grenze betragsmäßig nicht überschreitet. Das heißt, dass sowohl für Fälle, bei denen die Differenz von Soll-Wert minus Ist-Wert kleiner als null ist, als auch für Fälle, bei denen die Differenz zwischen Soll-Wert und Ist-Wert größer als null ist, beispielsweise bei einer relativen Abweichung des IstWerts vom Soll-Wert um zwei Prozent immer noch eine Übereinstimmung von Soll-Wert und Ist-Wert angenommen wird, sodass eine Steuerung bzw. Regelung des Betriebsparameters dann nicht erforderlich ist und der nächste Messzyklus der Drohne gemäß Schritt 405 abgewartet wird.

Die beschriebenen Vorgänge im Verfahren gemäß der Fig. 4, insbesondere die Schritte 403 bis 407 können dabei in unterschiedlicher Häufigkeit durchgeführt werden. Beispielsweise kann die Drohne ausgebildet sein, die auf sie einwirkende Beschleunigung oder den auf sie einwirkenden Druck kontinuierlich zu messen. Es sind auch Ausführungsformen denkbar, bei denen diese Messung in bestimmten zeitlichen Abständen erfolgt, beispielsweise 10⁻⁵s, so dass pro Sekunde einige tausend Messungen erfolgen. Da sich die Behälter üblicherweise mit hoher Geschwindigkeit durch die Behälterbehandlungsmaschinen bewegen, ist diese Frequenz der Messungen durchaus sinnvoll. Es kann auch vorgesehen sein, dass einige Messungen, wie beispielsweise die auf die Drohne einwirkende Beschleunigung mit anderer Frequenz erfolgen, als die Messung des auf die Drohne einwirkenden Druckes.

Es kann auch vorgesehen sein, dass das Messen der Beschleunigung oder das Messen des Druckes oder das Steuern/Regeln eines Betriebsparameters abhängig von der aktuellen Position der Drohne ist. Dazu kann die Drohne zusätzlich zu den entsprechenden Sensoren ein System zur Positionsbestimmung umfassen, das die Bestimmung der Position der Drohne in der Transporteinrichtung, aber auch in der gesamten Behälterbehandlungsanlage, also beispielsweise auch in einer der Behälterbehandlungsmaschinen ermöglicht. Abhängig von dieser Position kann es der Steuereinheit ermöglicht werden, gezielt bestimmte Komponenten der Behälterbehandlungsanlage anzusteuern, um Betriebsparameter zu ändern. Beispielsweise kann gemäß der Fig. 3c nur einer der Antriebe 371 oder 372 abhängig von der Position der Drohne entweder in der Transporteinrichtung 361 oder der Transporteinrichtung 362 gesteuert werden. Genauso kann gemäß der Fig. 3e die Anpresskraft der Zentriereinrichtung 91 spezifisch der Behälter aufnahmegesteuert werden, in der sich die Drohne gerade befindet.

Das Erfassen der Position bzw. die Information über die Position der Drohne in der Behälterbehandlungsanlage kann auch genutzt werden, um das Messen der Beschleunigung oder das Messen des Druckes durchzuführen oder nicht durchzuführen. Befindet sich die Drohne beispielsweise in einer Transporteinrichtung zum Massentransport gemäß den Fig. 3a und 3b oder gemäß der Fig. 1, so kann vor allem eine Messung des auf die Drohne einwirkenden Druckes wesentlich sein, wohingegen die auf die Drohne einwirkende Beschleunigung vernachlässigbar ist. Die Drohne kann dann entweder selbständig aufgrund ihrer ermittelten Position das Messen des Druckes ausführen und das Messen der Beschleunigung unterlassen oder die Steuereinheit weist über die bidirektionale Datenverbindung die Drohne an, den Druck zu messen und die Beschleunigung nicht zu messen. Andere Ausführungsformen, bei denen die Beschleunigung der Drohne oder die auf die Drohne einwirkenden Kräfte (siehe beispielsweise Fig. 3e) relevant sind, eine Messung des Druckes aber überflüssig ist, sind ebenfalls denkbar.

Das Verfahren der Fig. 4 bzw. sämtliche bisher beschriebenen Vorgänge der Regelung der Betriebsparameter können unter Zuhilfenahme eines neuronalen Netzes optimiert werden. Dazu kann die Steuereinheit selbst ein solches neuronales Netz umfassen, oder es kann der Steuereinheit zugeordnet sein und beispielsweise in einem zusätzlichen Server ausgeführt werden.

Das neuronale Netz ist dabei so ausgebildet, dass ihm die Ergebnisse der Vergleiche (bspw. aus Schritt 403) und/oder die entsprechenden Daten der Drohne und/oder die Soll-Werte übermittelt werden und zusätzlich die basierend auf dem Vergleich erfolgte Einstellung der Betriebsparameter. Anhand des Vergleichs zwischen den eingestellten Betriebsparametern, dem Ergebnis des Vergleichs der entsprechenden Daten mit den Soll-Werten und den nach der Einstellung der Betriebsparameter gemessenen Werten für Beschleunigung und Druck oder davon abgeleitete Grö-ßen kann das neuronale Netz lernen, ob die Einstellung des Betriebsparameters, basierend auf den zuerst erhaltenen Daten, verglichen mit den Soll-Werten zum Erfolg geführt hat (also beispielsweise die Differenz zwischen Daten und Soll-Werten reduziert hat), oder ob das Gegenteil der Fall war. Basierend darauf kann das neuronale Netz lernen, welche Einstellung von welchen Betriebsparametern in welchen Fällen (insbesondere bei welchen Differenzen von Daten zu Soll-Werten) zu einer tatsächlichen Verbesserung des Zustandes also einer Reduktion der Differenz zwischen Daten und Soll-Werten führen. Dieser Optimierung kann dann in das Verfahren gemäß der Fig. 4 einfließen, um die Regelung der Betriebsparameter zu optimieren.

## Patentansprüche

1. Behälterbehandlungsanlage (100) zum Behandeln von Behältern (130), wie Dosen oder Flaschen oder dergleichen in der getränkeverarbeitenden Industrie, wobei die Behälterbehandlungsanlage wenigstens eine Transporteinrichtung (103) zum Transportieren der Behälter und eine in die Transporteinrichtung einbringbare Drohne (101) umfasst, wobei die Behälterbehandlungsanlage eine Steuereinheit ausgebildet zur Regelung wenigstens eines Betriebsparameters und eine der Steuereinheit zugeordnete Speichereinrichtung ausgebildet zum Hinterlegen von Soll-Werten für den wenigstens einen Betriebsparameter umfasst, wobei die Drohne einen Beschleunigungssensor (202) zum Messen einer auf die Drohne einwirkenden Beschleunigung und einen Drucksensor (201) zum Messen eines auf die Drohne einwirkenden Drucks in der Transporteinrichtung umfasst,
**dadurch gekennzeichnet, dass**
die Drohne ausgebildet ist, Daten entsprechend einer gemessenen Beschleunigung und eines gemessenen Drucks an die Steuereinheit (102) zu übertragen und die Steuereinheit ausgebildet ist, wenigstens einen Betriebsparameter, der die Beschleunigung der Drohne und/oder den auf die Drohne einwirkenden Druck beeinflusst, abhängig von einem Vergleich zwischen den von der Drohne empfangenen Daten und in der Speichereinrichtung gespeicherter Soll-Werte für den Betriebsparameter und/oder die Beschleunigung und/oder den Druck, zu regeln.

2. Behälterbehandlungsanlage (100) nach Anspruch 1, wobei die Transporteinrichtung (103) eine Transporteinrichtung zum Transport der Behälter (130) in einem ungeordneten Massenstrom ist.

3. Behälterbehandlungsanlage (100) nach Anspruch 1 oder 2, wobei die Steuereinheit (102) einen der Transporteinrichtung (103) zugeordneten Antrieb, abhängig von dem Vergleich regeln kann; und/oder
wobei der Transporteinrichtung (103) ein Begrenzungsgeländer zugeordnet ist, das zwei sich gegenüberliegende Seitengeländer (351, 352) umfasst, wobei die Behälter in der Transporteinrichtung zwischen den Seitengeländern transportiert werden und wobei die Steuereinheit ausgebildet ist, den Abstand der Seitengeländer abhängig von dem Vergleich zu regeln.

4. Behälterbehandlungsanlage (100) nach einem der Ansprüche 1 bis 3, wobei die Behälterbehandlungsanlage eine Einschleuse-Einrichtung (143) zum Einschleusen einer Drohne in die Transporteinrichtung und stromab der Einschleuse-Einrichtung eine Ausschleuse-Einrichtung (144) zum Ausschleusen der Drohne umfasst, wobei die Ausschleuse-Einrichtung mit einem Detektor (145) verbunden ist, der die Drohne (101) in der Transporteinrichtung erkennen und von den übrigen Behältern unterscheiden kann.

5. Behälterbehandlungsanlage (100) nach einem der Ansprüche 1 bis 4, wobei die Steuereinheit (102) ein neuronales Netz umfasst oder der Steuereinheit (102) ein neuronales Netz zugeordnet ist, das ausgebildet ist, basierend auf einer Vielzahl von Vergleichen zwischen von der Drohne (101) empfangenen Daten und im Speicher gespeicherten Soll-Werten für den Betriebsparameter und/oder die Beschleunigung und/oder den Druck ein Optimierungsverfahren für die Regelung des Betriebsparameters zu erlernen.

6. Behälterbehandlungsanlage (100) nach einem der Ansprüche 1 bis 5, wobei die Drohne (101) ein System zur Positionsbestimmung in der Transporteinrichtung (103) umfasst und eine aktuelle Position der Drohne zusammen mit den Daten an die Steuereinheit (102) übertragen kann und wobei die Steuereinheit (102) ausgebildet ist, einen Betriebsparameter einer Komponente der Behälterbehandlungsanlage (100), der Einfluss auf die Beschleunigung der Drohne und/oder den auf die Drohne einwirkenden Druck in einer aktuellen Position der Drohne in der Transporteinrichtung (103) hat, zu regeln.

7. Behälterbehandlungsanlage (100) nach einem der Ansprüche 1 bis 6, wobei die Steuereinheit in der Drohne (101) oder außerhalb der Drohne angeordnet ist.

8. Regelverfahren für einen Betriebsparameter einer Behälterbehandlungsanlage (100) in der getränkeverarbeitenden Industrie, wobei die Behälterbehandlungsanlage wenigstens eine Transporteinrichtung (103) zum Transportieren der Behälter und eine in die Transporteinrichtung einbringbare Drohne (101) umfasst, wobei die Behälterbehandlungsanlage eine Steuereinheit ausgebildet zur Regelung wenigstens eines Betriebsparameters und eine der Steuereinheit zugeordnete Speichereinrichtung ausgebildet zum Hinterlegen von Soll-Werten für den wenigstens einen Betriebsparameter umfasst, wobei die Drohne einen Beschleunigungssensor (202) umfasst, der eine auf die Drohne wirkende Beschleunigung misst und einen Drucksensor (201) umfasst, der einen auf die Drohne (101) einwirkenden Druck in der Transporteinrichtung misst,
**dadurch gekennzeichnet, dass**
das Regelverfahren umfasst, dass die Drohne Daten entsprechend einer gemessenen Beschleunigung und eines gemessenen Drucks an eine Steuereinheit überträgt und die Steuereinheit (102) wenigstens einen Betriebsparameter, der die Beschleunigung der Drohne (101) und/oder den auf die Drohne einwirkenden Druck beeinflusst, abhängig von einem Vergleich zwischen den von der Drohne (101) empfangenen Daten und in der Speichereinrichtung gespeicherter Soll-Werte für den Betriebsparameter und/oder die Beschleunigung und/oder den Druck, regelt.

9. Regelverfahren nach Anspruch 8, wobei die Drohne (101) die Beschleunigung und/oder den Druck kontinuierlich oder in zeitlichen Abständen von 10⁻³s bis 10⁻⁵s misst und die Daten an die Steuereinheit überträgt, wobei die Steuereinheit (102) kontinuierlich oder in zeitlichen Abständen von 10⁻³s bis 10⁻⁵s den Betriebsparameter regelt.

10. Regelverfahren nach Anspruch 8 oder 9, wobei die Steuereinheit (102) einen der Transporteinrichtung (103) zugeordneten Antrieb abhängig von dem Vergleich regelt; und/oder wobei der Transporteinrichtung ein Begrenzungsgeländer zugeordnet ist, das zwei sich gegenüberliegende Seitengeländer (351, 352) umfasst, wobei die Behälter in der Transporteinrichtung zwischen den Seitengeländern transportiert werden und wobei die Steuereinheit den Abstand der Seitengeländer abhängig von dem Vergleich regelt.

11. Regelverfahren nach einem der Ansprüche 8 bis 10, wobei die Steuereinheit (102) abhängig von dem Vergleich feststellt, dass eine Reinigung und/oder Schmierung der Transporteinrichtung (103) notwendig ist und ein entsprechendes Signal an einen Bediener und/oder eine automatische Reinigungseinrichtung und/oder eine Schmiereinrichtung zum Schmieren der Transporteinrichtung, die basierend auf dem Signal eine Reinigung und/oder eine Schmierung der Transporteinrichtung durchführt, ausgibt; und/oder wobei die Steuereinheit abhängig von dem Vergleich und/oder der gemessenen Beschleunigung und/oder dem gemessenen Druck einen Fehler bei dem Transport der Behälter feststellt und ein entsprechendes Signal an einen Bediener und/oder eine Kontrolleinheit, wie einen Roboter, die den Fehler automatisch basierend auf dem Signal behebt, ausgibt.

12. Regelverfahren nach einem der Ansprüche 8 bis 11, wobei die Steuereinheit (102) ein neuronales Netz umfasst oder der Steuereinheit (102) ein neuronales Netz zugeordnet ist, das basierend auf einer Vielzahl von Vergleichen zwischen von der Drohne (101) empfangenen Daten und im Speicher gespeicherten Soll-Werten für den Betriebsparameter und/oder die Beschleunigung und/oder den Druck ein Optimierungsverfahren für die Regelung des Betriebsparameters erlernt und die Regelung des Betriebsparameters anhand des Optimierungsverfahrens optimiert.

13. Regelverfahren nach einem der Ansprüche 8 bis 12, wobei die Drohne (101) dieselbe äußere Form besitzt, wie die in der Transporteinrichtung (103) transportierten Behälter (130).

14. Regelverfahren nach einem der Ansprüche 8 bis 13, wobei die Drohne (101) im normalen Betrieb zusätzlich zu den von der Behälterbehandlungsanlage behandelten Behältern (130) und mit diesen zusammen in der Transporteinrichtung (103) transportiert wird.

15. Regelverfahren nach einem der Ansprüche 8 bis 14, wobei die Drohne (101) ein System zur Positionsbestimmung in der Transporteinrichtung (103) umfasst und wobei die Steuereinheit einen Betriebsparameter einer Komponente der Behälterbehandlungsanlage (100), der Einfluss auf die Beschleunigung der Drohne und/oder den auf die Drohne einwirkenden Druck in der aktuellen Position der Drohne in der Transporteinrichtung hat, regelt.

## Claims

1. Container-handling facility (100) for handling containers (130), such as cans or bottles or the like in the beverage processing industry, wherein the container-handling facility comprises at least one transport device (103) for transporting the containers and a drone (101) which can be brought into the transport device, wherein the container-handling facility comprises a control unit adapted to regulate at least one operating parameter and a memory device assigned to the control unit and adapted to store nominal values for the at least one operating parameter, wherein the drone comprises an acceleration sensor (202) for measuring an acceleration acting on the drone and a pressure sensor (201) for measuring a pressure acting on the drone in the transport device, **characterized in that**
the drone is adapted to transmit data corresponding to a measured acceleration and a measured pressure to the control unit (102) and wherein the control unit is adapted to regulate at least one operating parameter which influences the acceleration of the drone and/or the pressure acting on the drone, depending on a comparison between the data received from the drone and nominal values for the operating parameter and/or the acceleration and/or the pressure stored in the memory device.

2. Container-handling facility (100) according to claim 1, wherein the transport device (103) is a transport device for transporting the containers (130) in a disordered mass flow.

3. Container-handling facility (100) according to claim 1 or 2, wherein the control unit (102) can regulate a drive assigned to the transport device (103), depending on the comparison; and/or wherein the transport device (103) is assigned a boundary rail comprising two opposing side rails (351, 352), wherein the containers are transported in the transport device between the side rails and wherein the control unit is adapted to regulate the distance between the side rails depending on the comparison.

4. Container-handling facility (100) according to one of claims 1 to 3, wherein the container-handling facility comprises an inward transfer device (143) for inward transfer of a drone into the transport device and, downstream of the inward transfer device, an outward transfer device (144) for outward transfer of the drone, the outward transfer device being connected to a detector (145) which can detect the drone (101) in the transport device and distinguish it from other containers.

5. Container-handling facility (100) according to one of claims 1 to 4, wherein the control unit (102) comprises a neural network or a neural network is assigned to the control unit (102), which is adapted to learn an optimization method for the control of the operating parameter based on a plurality of comparisons between data received from the drone (101) and nominal values stored in the memory for the operating parameter and/or the acceleration and/or the pressure.

6. Container-handling facility (100) according to one of claims 1 to 5, wherein the drone (101) comprises a system for determining a position in the transport device (103) and can transmit a current position of the drone together with the data to the control unit (102), and wherein the control unit (102) is adapted to regulate an operating parameter of a component of the container-handling facility (100) which has an influence on the acceleration of the drone and/or the pressure acting on the drone in a current position of the drone in the transport device (103).

7. Container-handling facility (100) according to one of claims 1 to 6, wherein the control unit is arranged in the drone (101) or outside the drone.

8. Control method for controlling an operating parameterof a container-handling facility (100) in the beverage processing industry, wherein the container-handling facility comprises at least one transport device (103) for transporting the containers and a drone (101) which can be brought into the transport device, wherein the container-handling facility comprises a control unit adapted to regulate at least one operating parameter and a memory device assigned to the control unit and adapted to store nominal values for the at least one operating parameter, wherein the drone comprises an acceleration sensor (202) which measures an acceleration acting on the drone and a pressure sensor (201) which measures a pressure in the transport device acting on the drone (101),
**characterized in that**
the control method comprises that the drone transmits data corresponding to a measured acceleration and a measured pressure to a control unit and that the control unit (102) regulates at least one operating parameter which influences the acceleration of the drone (101) and/or the pressure acting on the drone, depending on a comparison between the data received from the drone (101) and nominal values for the operating parameter and/or the acceleration and/or the pressure stored in the memory device.

9. Control method according to claim 8, wherein the drone (101) measures the acceleration and/or the pressure continuously or at time intervals of 10⁻³s to 10⁻⁵s and transmits the data to the control unit, wherein the control unit (102) controls the operating parameter continuously or at time intervals of 10⁻³s to 10⁻⁵s.

10. Control method according to claim 8 or 9, wherein the control unit (102) controls a drive assigned to the transport device (103) depending on the comparison; and/or wherein the transport device is assigned to a boundary rail comprising two opposing side rails (351, 352), wherein the containers are transported in the transport device between the side rails and wherein the control unit regulates the distance between the side rails depending on the comparison.

11. Control method according to one of claims 8 to 10, wherein the control unit (102) determines, depending on the comparison, that a cleaning and/or a lubrication of the transport device (103) is necessary and outputs a corresponding signal to an operator and/or an automatic cleaning device and/or a lubrication device for lubricating the transport device, which performs a cleaning and/or a lubrication of the transport device based on the signal; and/or
wherein the control unit detects an error in the transport of the containers depending on the comparison and/or the measured acceleration and/or the measured pressure, and outputs a corresponding signal to an operator and/or a control unit, such as a robot, which corrects the error automatically based on the signal.

12. Control method according to one of claims 8 to 11, wherein the control unit (102) comprises a neural network or a neural network is assigned to the control unit (102), which, based on a plurality of comparisons between data received from the drone (101) and nominal values for the operating parameter and/or the acceleration and/or the pressure stored in the memory, learns an optimization method for the regulation of the operating parameter and optimizes the regulation of the operating parameter using the optimization method.

13. Control method according to one of claims 8 to 12, wherein the drone (101) has the same outer shape as the containers (130) transported in the transport device (103).

14. Control method according to one of claims 8 to 13, wherein the drone (101) is transported in normal operation in addition to the containers (130) handled by the container-handling facility and together with these in the transport device (103).

15. Control method according to one of claims 8 to 14, wherein the drone (101) comprises a system for determining the position in the transport device (103) and wherein the control unit regulates an operating parameter of a component of the container-handling facility (100) which has an influence on the acceleration of the drone and/or the pressure acting on the drone in the current position of the drone in the transport device.

## Revendications

1. Installation de traitement de récipients (100) permettant de traiter des récipients (130), tels que des boîtes ou des bouteilles ou similaires dans l'industrie du traitement des boissons, dans laquelle l'installation de traitement de récipients comprend au moins un dispositif de transport (103) permettant de transporter des récipients et un drone (101) pouvant être introduit au sein du dispositif de transport, dans laquelle l'installation de traitement de récipients comprend une unité de commande conçue pour réguler au moins un paramètre de fonctionnement et un dispositif de mémoire associé à l'unité de commande et conçu pour stocker des valeurs de consigne pour le au moins un paramètre de fonctionnement, dans laquelle le drone comprend un capteur d'accélération (202) permettant de mesurer une accélération s'exerçant sur le drone et un capteur de pression (201) permettant de mesurer une pression s'exerçant sur le drone au sein du dispositif de transport,
**caractérisé en ce que**
le drone est conçu pour transmettre à l'unité de commande (102) des données en fonction d'une accélération mesurée et d'une pression mesurée et l'unité de commande est conçue pour réguler au moins un paramètre de fonctionnement qui influence l'accélération du drone et/ou la pression s'exerçant sur le drone, en fonction d'une comparaison entre les données reçues du drone et des valeurs de consigne stockées dans le dispositif de mémoire pour le paramètre de fonctionnement et/ou l'accélération et/ou la pression.

2. Installation de traitement de récipients (100) selon la revendication 1, dans laquelle le dispositif de transport (103) est un dispositif de transport permettant de transporter les récipients (130) au sein d'un flux massique désordonné.

3. Installation de traitement de récipients (100) selon la revendication 1 ou 2, dans laquelle l'unité de commande (102) peut réguler un entraînement associé au dispositif de transport (103) en fonction de ladite comparaison ; et/ou
dans laquelle une rambarde de limitation comprenant deux rambardes latérales (351, 352) se faisant face est associée au dispositif de transport (103), dans laquelle les récipients sont transportés au sein du dispositif de transport entre les rambardes latérales et dans laquelle l'unité de commande est conçue pour réguler la distance entre les rambardes latérales en fonction de ladite comparaison.

4. Installation de traitement de récipients (100) selon l'une quelconque des revendications 1 à 3, dans laquelle l'installation de traitement de récipients comprend un dispositif d'introduction (143) permettant d'introduire un drone au sein du dispositif de transport et, en aval du dispositif d'introduction, un dispositif de sortie (144) permettant de faire sortir le drone, dans laquelle le dispositif de sortie est relié à un détecteur (145) qui peut détecter le drone (101) au sein du dispositif de transport et le distinguer des autres récipients.

5. Installation de traitement de récipients (100) selon l'une quelconque des revendications 1 à 4, dans laquelle l'unité de commande (102) comprend un réseau neuronal ou un réseau neuronal est associé à l'unité de commande (102), lequel réseau neuronal est conçu pour apprendre un procédé d'optimisation destiné à réguler le paramètre de fonctionnement en se basant sur une pluralité de comparaisons entre des données reçues du drone (101) et des valeurs de consigne stockées dans la mémoire pour le paramètre de fonctionnement et/ou l'accélération et/ou la pression.

6. Installation de traitement de récipients (100) selon l'une quelconque des revendications 1 à 5, dans laquelle le drone (101) comprend un système de détermination de position au sein du dispositif de transport (103) et peut transmettre une position actuelle du drone à l'unité de commande (102) en même temps que les données et dans laquelle l'unité de commande (102) est conçue pour réguler un paramètre de fonctionnement d'un composant de l'installation de traitement de récipients (100) qui a une influence sur l'accélération du drone et/ou sur la pression s'exerçant sur le drone dans une position actuelle du drone au sein du dispositif de transport (103).

7. Installation de traitement de récipients (100) selon l'une quelconque des revendications 1 à 6, dans laquelle l'unité de commande est agencée dans le drone (101) ou à l'extérieur du drone.

8. Procédé de régulation pour un paramètre de fonctionnement d'une installation de traitement de récipients (100) dans l'industrie du traitement des boissons, dans lequel l'installation de traitement de récipients comprend au moins un dispositif de transport (103) permettant de transporter les récipients et un drone (101) pouvant être introduit au sein du dispositif de transport, dans lequel l'installation de traitement de récipients comprend une unité de commande conçue pour réguler au moins un paramètre de fonctionnement et un dispositif de mémoire associé à l'unité de commande et conçu pour stocker des valeurs de consigne pour le au moins un paramètre de fonctionnement, dans lequel le drone comprend un capteur d'accélération (202) qui mesure une accélération s'exerçant sur le drone et comprend un capteur de pression (201) qui mesure une pression s'exerçant sur le drone (101) au sein du dispositif de transport,
**caractérisé en ce que**
le procédé de régulation comprend les étapes dans lesquelles le drone transmet des données à une unité de commande en fonction d'une accélération mesurée et d'une pression mesurées et l'unité de commande (102) régule au moins un paramètre de fonctionnement qui influence l'accélération du drone (101) et/ou la pression s'exerçant sur le drone, en fonction d'une comparaison entre les données reçues du drone (101) et des valeurs de consigne stockées dans le dispositif de mémoire pour le paramètre de fonctionnement et/ou l'accélération et/ou la pression.

9. Procédé de régulation selon la revendication 8, dans lequel le drone (101) mesure l'accélération et/ou la pression de manière continue ou à des intervalles temporels compris entre 10⁻³s et 10⁻⁵s et transmet les données à l'unité de commande, dans lequel l'unité de commande (102) régule le paramètre de fonctionnement de manière continue ou à des intervalles temporels compris entre 10⁻³s et 10⁻⁵s.

10. Procédé de régulation selon la revendication 8 ou 9, dans lequel l'unité de commande (102) régule un entraînement associé au dispositif de transport (103) en fonction de ladite comparaison ; et/ou dans lequel une rambarde de limitation comprenant deux rambardes latérales (351, 352) se faisant face est associée au dispositif de transport, dans lequel les récipients sont transportés au sein du dispositif de transport entre les rambardes latérales et dans lequel l'unité de commande régule la distance entre les rambardes latérales en fonction de ladite comparaison.

11. Procédé de régulation selon l'une quelconque des revendications 8 à 10, dans lequel l'unité de commande (102) détermine, en fonction de ladite comparaison, qu'un nettoyage et/ou une lubrification du dispositif de transport (103) est nécessaire et envoie un signal correspondant à un opérateur et/ou à un dispositif de nettoyage automatique et/ou à un dispositif de lubrification permettant de lubrifier le dispositif de transport, qui met en oeuvre un nettoyage et/ou une lubrification du dispositif de transport en se basant sur le signal ; et/ou
dans lequel l'unité de commande détecte une erreur lors du transport des récipients en fonction de ladite comparaison et/ou de l'accélération mesurée et/ou de la pression mesurée et envoie un signal correspondant à un opérateur et/ou à une unité de contrôle, par exemple un robot, qui corrige automatiquement l'erreur en se basant sur ledit signal.

12. Procédé de régulation selon l'une quelconque des revendications 8 à 11, dans lequel l'unité de commande (102) comprend un réseau neuronal ou un réseau neuronal est associé à l'unité de commande (102), qui apprend un procédé d'optimisation destiné à réguler le paramètre de fonctionnement en se basant sur une pluralité de comparaisons entre les données reçues du drone (101) et des valeurs de consigne stockées dans la mémoire pour le paramètre de fonctionnement et/ou l'accélération et/ou la pression et optimise la régulation du paramètre de fonctionnement à l'aide du procédé d'optimisation.

13. Procédé de régulation selon l'une quelconque des revendications 8 à 12, dans lequel le drone (101) présente la même forme extérieure que les récipients (130) transportés au sein du dispositif de transport (103).

14. Procédé de régulation selon l'une quelconque des revendications 8 à 13, dans lequel le drone (101) est transporté en fonctionnement normal en plus des récipients (130) traités par l'installation de traitement de récipients et est transporté conjointement avec lesdits récipients au sein du dispositif de transport (103).

15. Procédé de régulation selon l'une quelconque des revendications 8 à 14, dans lequel le drone (101) comprend un système de détermination de position au sein du dispositif de transport (103) et dans lequel l'unité de commande régule un paramètre de fonctionnement d'un composant de l'installation de traitement de récipients (100) qui a une influence sur l'accélération du drone et/ou la pression s'exerçant sur le drone dans la position actuelle du drone au sein du dispositif de transport.
